# EUROPÄISCHE PATENTANMELDUNG

(11) **EP 1 669 289 A1**
(43) Veröffentlichungstag der Anmeldung: **14.06.2006**
(21) Anmeldenummer: 05019317.6
(22) Anmeldetag: 06.09.2005
(51) Int. Cl.: B64D 11/06

(54) **Passagiersitz, insbesondere Fluggastsitz, mit einstellbarer Sitztiefe**

(30) Priorität: 07.12.2004 DE 102004059036
(71) Anmelder: Recaro Aircraft Seating GmbH & Co. KG, 74523 Schwäbisch Hall (DE)
(72) Erfinder: Frey, Andreas, 88090 Immenstaad (DE); Bauer, Jürgen, 71560 Sulzbach (DE)
(74) Vertreter: Bartels & Partner

(57) **Zusammenfassung**

Die Erfindung betrifft einen Passagiersitz, insbesondere Fluggastsitz, mit Sitzkomponenten wie einem Sitzrahmen, einer Rückenlehne, sowie einem Sitzpolsterträger (30) mit Sitzpolster (16), wobei mittels einer Einstelleinrichtung (32) mit Energiespeicher (38) die zwischen Rückenlehne und Sitzvorderkante (26) gemessene Sitztiefe einstellbar und in gewünschten Einstellpositionen festlegbar ist. Dadurch, dass die Einstelleinrichtung mindestens einen Energiespeicher mit veränderbarem Volumen aufweist und dass jedem Volumenzustand (34,36) eine Einstellpositon der Sitztiefe zuordenbar ist, kann man im wesentlichen frei von mechanischen Komponenten, wie Hebelgetrieben, eine Sitztiefeneinstellung vornehmen.

## Beschreibung

Die Erfindung bezieht sich auf einen Passagiersitz, insbesondere Fluggastsitz mit Sitzkomponenten wie einem Sitzrahmen, einer Rückenlehne, sowie einem Sitzpolsterträger mit Sitzpolster, wobei mittels einer Einstelleinrichtung mit Energiespeicher, die zwischen Rückenlehne und Sitzvorderkante gemessene Sitztiefe einstellbar und in gewünschten Einstellpositionen festlegbar ist.

Ein Fluggastsitz dieser Art ist durch die US-Patentschrift 5,560,681 bekannt. Die Möglichkeit, bei derartigen Sitzen die Sitztiefe innerhalb bestimmter Grenzen zu verändern, trägt wesentlich zum Komfort des Sitzbenutzers mit bei, weil der Abstand zwischen Sitzvorderkante und Rückenlehne an den Abstand zwischen Kniekehle und Gesäß des jeweiligen Sitzbenutzers angepasst werden kann. Dies ist insbesondere bei Sitzen für die Bestuhlung von Verkehrsflugzeugen vorteilhaft, wo in Anbetracht der in Frage kommenden, meist ausgedehnten Reisedauer ein Höchstmaß an Sitzbequemlichkeit anzustreben ist. Die Anpassung der Sitztiefe ist bei solchen Sitzen, insbesondere auch dann günstig, wenn sich an der Sitzvorderkante eine klapp- oder schwenkbare Beinauflage anschließt.

Ferner spielt die Anpassung der Sitztiefe eine Rolle, wenn bei modernen Fluggastsitzen wie sie im Business Class und First Class Bereich Anwendung finden (vgl. DE 102 20 248 C1), eine Art Bettposition vorgesehen ist, bei der die abgeneigte Rückenlehne nebst dem Sitzteil und der Beinauflage, eine im wesentlichen geschlossene Liegeauflagefläche für den Sitzbenutzer ausbilden sollen, und zwar auch für größere Menschen mit der Folge, dass die durch die ausgefahrene Beinauflage erzielte zusätzliche Liegefläche immer noch nicht genügen würde, eine insgesamt lange Gesamtauflagefläche zu schaffen. Durch das zusätzliche Verschieben der Sitzvorderkante nach vorne, wobei durch die Anlenkung der Beinauflage an den Sitzrahmen oder Sitzpolsterträger diese mit nach vorne bewegt wird, wird die noch fehlende Auflagefläche geschaffen, wobei eine Ausfahrbewegung von 3 cm bis 6 cm bereits genügen kann, um auch hochgewachsenen Menschen eine angenehme Komfort- oder Bettposition zu schaffen. Vorteilhafterweise ist dabei auch erreicht, dass eine etwaige Lücke zwischen dem oberen Ende der Beinauflage und dem Sitzpolsterträger nebst Sitzpolster geschlossen wird.

Die angesprochene US-Schrift 5,560,681 weist hierbei als Betätigungs- oder Einstelleinrichtung ein zwischen Sitzrahmen und Sitzpolsterträger angeordnetes Hebelgetriebe auf, das durch eine als Antrieb und Energiespeicher vorgesehene Druckfeder für eine Schiebebewegung des Sitzpolsterträgers im Sinne der Vergrößerung der Sitztiefe vorgespannt ist, um dergestalt eine sinnfällige Sitztiefeneinstellung zu ermöglichen. Bei der bekannten Lösung ist die Druckfeder normalerweise mittels eines Hydrozylinders gesperrt, der hydraulisch entriegelbar ist, so dass die freigegebene Federkraft der Druckfeder, den Sitzpolsterträger nach vorne verschiebt. Um den Sitzpolsterträger wieder zur Verkleinerung der Sitztiefe zurückzuschieben, muss der Sitzbenutzer den Hydrozylinder entriegeln und den Sitzpolsterträger gegen die Kraft der Druckfeder manuell zurückschieben.

Abgesehen davon, dass seitens des Sitzbenutzers eine Mühewaltung und ein entsprechender Kraftaufwand erforderlich ist, um eine Verkleinerung der Sitztiefe zu bewirken, ist auch die bauliche Ausgestaltung der Betätigungseinrichtung in Form eines Hebelgetriebes mit Druckfeder und zur Verriegelung vorgesehenem Hydrozylinder bei derartigen Sitzen verhältnismäßig groß. Der für die benötigten Bauteile und die zugehörigen Gelenkverbindungen erforderliche Bauraum ist als nachteilig anzusehen, und insbesondere führt die Teilevielzahl auch zu einem hohen Gewicht bei dem jeweiligen Fluggastsitz, was aus naheliegenden Gründen (Treibstoffkosten) nicht gewünscht ist. Auch ist aufgrund der Kompliziertheit der Hebelmechanik ein durchgehend funktionssicherer Betrieb nicht immer gewährleistet.

Ausgehend von diesem Stand der Technik liegt der Erfindung die Aufgabe zugrunde, einen Passagiersitz, insbesondere Fluggastsitz zu schaffen, der dem Sitzbenutzer bei der Einstellung der Sitztiefe einen vergleichsweise besseren Bedienungskomfort zur Verfügung stellt und sich darüber hinaus durch eine vereinfachte, leichtgewichtige und platzsparende Bauweise der Einstelleinrichtung für die Sitztiefeneinstellung auszeichnet.

Erfindungsgemäß ist diese Aufgabe durch einen Sitz gelöst, der die Merkmale des Patentanspruches 1 in seiner Gesamtheit aufweist.

Dadurch, dass gemäß dem kennzeichnenden Teil des Patentanspruches 1 die Einstelleinrichtung mindestens einen Energiespeicher mit veränderbarem Volumen aufweist und dass jedem Volumenzustand eine Einstellposition der Sitztiefe zuordenbar ist, kann man im wesentlichen frei von mechanischen Komponenten, wie Hebelgetrieben eine Sitztiefeneinstellung vornehmen. Der Einsatz eines Energiespeichers mit veränderbarem Volumen ermöglicht eine hohe Bedienungsbequemlichkeit, weil der Sitzbenutzer im Gegensatz zu dem bekannten Sitz nach der US-Entgegenhaltung Einstellungen in beiden Richtungen vornehmen kann, ohne manuell aufzubringenden Kraftaufwand. Des weiteren läßt sich der dahingehende Energiespeicher mit veränderbarem Volumen in leichtgewichtiger, platzsparender Bauweise ausbilden, und auf eine hydraulische Entriegelung kann verzichtet werden, so dass insgesamt die erfindungsgemäße Lösung im Gebrauch sich als sehr funktionssicher erweist.

Vorzugsweise besteht dabei der Energiespeicher aus mindestens einer Speicherblase, mit mindestens einer elastisch nachgiebigen Umfassungswand, die mit einem Medium (Umgebungsluft) befüll- und entlerrbar ist. Eine entsprechende Versorgungspumpe (Vakuumpumpe) ist vom jeweiligen Sitzbenutzer oder einer Bedienperson (Kabinenpersonal) leicht anzusteuern und zu betätigen, wobei die Betätigungsluft für den Energiespeicher aus dem gängigen Bordnetz eines Luftfahrzeuges entnehmbar ist.

Um eine sichere vollständige Entleerung der Speicherblase zu gewährleisten, bei der die Sitzvorderkante in der dann äußerst rückwärtigen Position ist, bei kleinster Sitzeinstelltiefe, ist die jeweilige Speicherblase im Ausgangszustand mit dem Medium (Umgebungsluft) befüllt und die Sitzvorderkante ist dann unter Vergrößerung der Sitztiefe in die ausgefahrene Stellung bewegt, wobei in Richtung einer entleerten oder vakuumisierten Speicherblase die Sitztiefe dann bis auf den genannten Ausgangswert zurückgeht, bei der die Sitzvorderkante in Richtung des sonstigen Sitzteiles zurückverfahren ist. Dergestalt lassen sich Hemmnisse im Betriebe vermeiden und die vollständige Entleerung der Speicherblase, sofern notwendig, sicherstellen. In Abhängigkeit des Befüllungszustandes der jeweiligen Speicherblase kann die Sitzvorderkante auch in Zwischenausfahrstellungen vom Sitzbenutzer entsprechend angehalten werden. Damit ist ein hohes Maß an Sitzvariationen erreichbar. Ferner kann die Rückstellung der Sitzvorderkante von elastischen Materialien des Sitzteilpolsters und/oder des Polsterbezugmateriales mit unterstützt sein.

Vorzugsweise ist ferner vorgesehen, dass der jeweilige Energiespeicher in Richtung des Sitzteiles sich abstützen kann, um dergestalt einen Ausfahrhub nach vorne in Richtung der Sitzvorderkante ausschließlich ausüben zu können. Sofern vorzugsweise in den Polstermaterialien des Sitzes eine Tasche oder Taschenaufnahme vorgesehen ist, läßt sich dergestalt die Speicherblase einfach austauschen und mit der Versorgungspumpe jeweils verbinden. Anstelle einer Speicherblase aus Elastomermaterial kann die Speicherblase selbst auch aus einem großporigen Schaum aufgebaut sein, der vorzugsweise von einer Tasche umgeben, sich mittels der Versorgungspumpe und dem Medium weiter aufblähen läßt, um dergestalt einen Ausfahrvorgang für die Sitzvorderkante zu bewirken. Da sich dem Grunde nach das Schaummaterial des Polsterteiles in der dahingehenden Speicherblase fortsetzt, sind für einen Sitzbenutzer die Materialunterschiede nicht spürbar, was zu einem erhöhten Sitzkomfort mit beiträgt.

Die Speicherblase kann aus einem einzelnen, länglichen, ballonartigen Körper bestehen; es sind hier aber auch Mehrkammersysteme denkbar bis herunter zu einzelnen Speicherkügelchen, die in einer Speichertasche aufgenommen, sich unter der Wirkung eines Mediums entsprechend aufblähen, zwecks Vergrößerung des Volumens des Energiespeichers.

Sofern als Medium Umgebungsluft eingesetzt wird, führt dies zu einem reduzierten Gewicht, wozu auch mit beiträgt, dass die Versorgungspumpe als Luft- und/oder Vakuumpumpe ausbildbar ist. Anstelle von Umgebungsluft kann aber auch ein anderes Medium, beispielsweise Stickstoffgas eingesetzt werden, ein hydraulisches Fluid und/oder eine noch pumpbare, gelartige Substanz.

Im Folgenden wird der erfindungsgemäße Passagiersitz anhand eines Ausführungsbeispieles für einen Fluggastsitz näher erläutert. Dabei zeigen in prinzipieller und nicht maßstäblicher Darstellung die
Fig. 1 in Seitenansicht einen Fluggastsitz von seinem technischen Grundlagenaufbau her,
Fig. 2 einen vergrößerten Ausschnitt des Bereiches der Sitzvorderkante gemäß der Darstellung nach der Fig. 1.

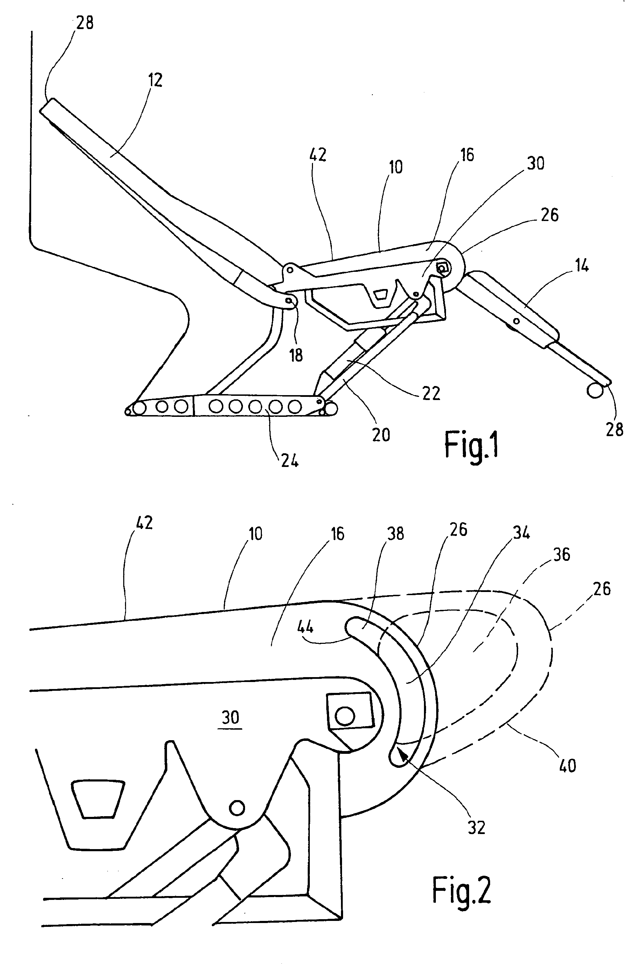

Die Darstellung nach der Fig. 1 zeigt einen Fluggastsitz in teilgeneigter Stellung (comfort position). Solche Fluggastsitze mit dem entsprechenden Ausstattungsniveau finden sich häufig im ersten Klasse Bereich von Langstrekkenflugzeugen; könnten dem Grunde nach aber auch im Bereich von gehoben ausgestatteten Reisebussen oder bei Passagierschiffen einschließlich Fähren, sowie innerhalb von medizinischen Einrichtungen wie einem OP-Saal Verwendung finden. Der gezeigte Fluggastsitz nach der Fig. 1 ist vorzugsweise Bestandteil eines Einzelabteils (compartment), wobei gemäß der Darstellung nach der Fig. 1 der jeweilige Sitz gegenüber in der Reihe nachfolgenden Sitzen oder Sitzgruppen von diesen räumlich abgegrenzt ist. Der Fluggastsitz kann dem Grunde nach aber auch in Reihe mehrfach nebeneinander angeordnet im Business Class Bereich für eine übliche Mehrsitzanordnung Verwendung finden.

Der Fluggastsitz ist aus einzelnen Sitzkomponenten zusammengesetzt wie einem Sitzteil 10, einer Rückenlehne 12 und einer Beinauflage 14. Der besseren Darstellung wegen ist darüber hinaus die Polsterauflage 16 nur mit ihrem oberen Teil als wesentlicher Teil des Sitzteiles wiedergegeben. Hierdurch ist es möglich die darunterliegenden Fluggastsitzteile zumindest teilweise sichtbar zu machen.

Die Rückenlehne 12 ist über eine nicht weiter dargestellte erste Betätigungseinrichtung in ihrer Neigung gegenüber einer Grundstellung mit im wesentlichen horizontal verlaufendem Sitzteil 10 schwenkbar um eine Gelenkstelle 18 angeordnet. Das Sitzteil 10 selbst ist gleichfalls schwenkbar und zwar über einen Viergelenkrahmen 20, mit einer in Form eines Actuators ausgebildeten Stelleinrichtung 22. Der Viergelenkrahmen 20 ist über Sitzschienen 24 auf dem Kabinenboden entsprechend aufständerbar. Die Beinauflage 14 ist in ihrer Länge ausfahrbar, und über eine nicht dargestellte dritte Betätigungseinrichtung gleichfalls in ihrer Neigung schwenkbar mit ihrer Oberseite im Bereich der Sitzvorderkante angelenkt. Der besseren Darstellung wegen wurde in der Fig. 2 die dahingehende Beinauflage 14 weggelassen.

Die Ansteuerung der verschiedenen genannten Sitzkomponenten erfolgt mittels verschiedener Betätigungseinrichtungen, was auf dem dahingehenden Sitzgebiet üblich ist, so dass an dieser Stelle hierauf nicht mehr näher eingegangen wird. Des weiteren wird bei dem gesamten Sitz auf Leichtbauweise geachtet, um die entsprechende Nutzlast erhöhen zu können. Des weiteren kann der Fluggastsitz mit einer Überwachungseinrichtung ausgestattet sein, beispielsweise in Form einer Rechnereinheit einschließlich eines Klein-Prozessrechners oder dergleichen. Mittels der nicht näher dargestellten Überwachungseinrichtung lassen sich dabei kollisionsbegründende Randgeometrien 28 der bewegbaren Sitzkomponenten überwachen, um dergestalt einen sicheren Betrieb zu ermöglichen. Die Polsterauflage 16 liegt auf einem Sitzpolsterträger 30 auf und ist im Querschnitt gesehen zur Sitzvorderkante 26 mit einem bogenförmigen Abschluß versehen.

Mittels einer als Ganzes mit 32 bezeichneten Einstelleinrichtung, die der einfacheren Darstellung wegen, nur in der Fig. 2 wiedergegeben ist, läßt sich mittels eines Energiespeichers die zwischen Rückenlehne 12 und Sitzvorderkante 26 gemessene Sitztiefe einstellen und in gewünschten Einstellpositionen festlegen. Dabei ist in Blickrichtung auf die Fig. 2 gesehen links die äußerst zurückgefahrene Position wiedergegeben, wie sie der Darstellung nach der Fig. 1 entspricht und rechts davon sowie strichliniert, die ausgefahrene Position, bei der die Sitzvorderkante 26 sich in Sitzrichtung nach vorne bewegt hat, um dergestalt die Sitztiefe zu erhöhen. Die Einstelleinrichtung 32 weist mindestens einen Energiespeicher mit veränderbarem Volumen auf, wobei jedem Volumenzustand 34, 36 eine Einstellposition der Sitztiefe zuordenbar ist. Als Energiespeicher dient vorzugsweise eine Speicherblase 38, die in der Fig. 2 links dargestellt mit ihrem kleinsten Volumen wiedergegeben ist und rechts dargestellt mit einem demgegenüber vergrößertem Volumen. Hierfür weist die Speicherblase 38 eine elastisch nachgiebige Umfassungswand 40 auf, die mit einem Medium befüll- und entleerbar ist. Als Medium (nicht näher dargestellt) kann ein Fluid, insbesondere ein Arbeitsgas wie Umgebungsluft dienen.

Im Ausgangszustand (rechte strichlinierte Darstellung) ist die Speicherblase 38 mit dem Medium weitestgehend befüllt, und die Sitzvorderkante 26 ist demgemäß unter Vergrößerung der Sitztiefe in der vorderen ausgefahrenen Stellung, wobei in Richtung einer entleerten oder vakuumisierten Speicherblase 38 (linke durchgezogene Stellung) die Sitztiefe bis auf den ursprünglichen Ausgangswert zurückgeht, bei der die Sitzvorderkante 26 in Richtung des Sitzteiles 10 im wesentlichen zurückverfahren ist, gemäß der Darstellung nach der Fig. 1. Bei der dahingehenden Anordnung ist sichergestellt, dass sich die Speicherblase 38 vollständig entleeren kann, um dergestalt sicher in den Ausgangszustand wieder zurückzukehren. Gegebenenfalls besteht aber auch die Möglichkeit als Ausgangszustand den eingefahrenen Zustand zu nehmen und als betätigten Zustand die ausgefahrene Position. Zwischen den in Fig. 2 gezeigten Maximalstellungen läßt sich die Sitzvorderkante 26 in Abhängigkeit des Befüllungszustandes der Speicherblase 38 in Zwischenstadien fixieren, so dass hier eine weitestgehende Flexibilität erreicht ist.

Die bereits aufgezeigte Rückstellung der Sitzvorderkante 26 kann von elastischen Materialien des Sitzpolsters 16 und/oder des Polsterbezugmateriales 42 mit unterstützt sein. Auch wäre es möglich, unter Trennung des Sitzpolsters 16 nur den vorderen Teil mit dem vorderen Teil der Speicherblase 38 mitzuführen und ein etwaig sich ergebender Spalt könnte von elastischem Bezugmaterialien 42 abgedeckt sein (nicht dargestellt).

Der Energiespeicher in Form der Speicherblase 38 stützt sich auf seiner dem Sitzpolsterträger 30 zugewandten Seite an diesem und/oder sonstigen weiteren Stegteilen (nicht dargestellt) ab. Ferner können auch nicht näher dargestellte Halteeinrichtungen innerhalb des Polsterschaumes vorgesehen sein, die auch aus Bezugmaterialien selbst und/oder aus verdichtetem Polsterschaummaterial bestehen können. Mit den dahingehenden Maßnahmen wird sichergestellt, dass der Energiespeicher, insbesondere in Form der Speicherblase 38 sich nicht in Richtung der Rückenlehne 12 bewegt, was die mögliche Ausfahrbewegung für die Sitzvorderkante 26 beeinträchtigen könnte. Die Speicherblase 38 kann in einer Tasche 44 oder in eine Taschenaufnahme zwischen den Polstermaterialien im Bereich der Sitzvorderkante 26 einsetzbar sein, was bei Beschädigungen einen gegebenenfalls raschen Wechsel ermöglicht. Die Speicherblase besteht gemäß der Darstellung nach der Fig. 2 aus einem länglichen, einstückigen Speicherschlauch, dessen größte Ausdehnung im unbetätigten Zustand (linke Darstellung) längs der Sitzvorderkante 26 verläuft und quer dazu eine demgegenüber verringerte Ausdehnung hat.

Die Speicherblase 38 ist mit ihrer jeweiligen Umfassungswand 40 aus einem elastisch nachgiebigen Kautschukmaterial gebildet, wie man es von Anordnungen im Hydrospeicherbau her kennt. Das Innere der Speicherblase 38 ist an eine nicht näher dargestellte Versorgungspumpe anschließbar, die das Aufblähen der Speicherblase 38 ermöglicht, sowie eine Vakuumisierung ihres Speicherinnenvolumens für einen Rückstellvorgang. Anstelle einer Speicherblase 38 können auch mehrere Einzelblasensysteme treten, was gegebenenfalls die Einstellmöglichkeiten noch weiter erhöhen hilft. Anstelle der aufgezeigten Gummispeicherblase 38 kann auch ein großporiger Schaum (nicht dargestellt) treten oder die Speicherblase 38 selbst besteht aus einem großporigen Schaum, der beispielsweise von der Tasche 44 aufnehmbar ist. Es genügt dann eine relativ geringe Medium- oder Luftmenge, um die Speicherblase 38 in ihrem Volumen zu vergrößern oder in umgekehrter Richtung zu verringern. Mit der erfindungsgemäßen Anordnung ist es möglich, die Sitztiefe zu erhöhen, was insbesondere dann von Vorteil ist, wenn man bei modernen Sitzsystemen mit Liegekomfort die Liegeauflagefläche sinnfällig vergrößern möchte, was aufgrund der beengten Einbauverhältnisse mit der ausfahrbaren Beinauflage 14 allein nicht erreichbar wäre.

## Patentansprüche

1. Passagiersitz, insbesondere Fluggastsitz mit Sitzkomponenten wie einem Sitzrahmen (20), einer Rückenlehne (12), sowie einem Sitzpolsterträger (30) mit Sitzpolster (16), wobei mittels einer Einstelleinrichtung (32) mit Energiespeicher die zwischen Rückenlehne (12) und Sitzvorderkante (26) gemessene Sitztiefe einstellbar und in gewünschten Einstellpositionen festlegbar ist, **dadurch gekennzeichnet, dass** die Einstelleinrichtung (32) mindestens einen Energiespeicher mit veränderbarem Volumen aufweist und dass jedem Volumenzustand (34, 36) eine Einstellposition der Sitztiefe zuordenbar ist.

2. Passagiersitz nach Anspruch 1, **dadurch gekennzeichnet, dass** der Energiespeicher aus mindestens einer Speicherblase (38) mit mindestens einer elastisch nachgiebigen Umfassungswand (40) gebildet ist, die mit einem Medium befüll- und entleerbar ist.

3. Passagiersitz nach Anspruch 2, **dadurch gekennzeichnet, dass** das Medium ein Fluid, insbesondere ein Arbeitsgas wie Umgebungsluft ist.

4. Passagiersitz nach Anspruch 2 oder 3, **dadurch gekennzeichnet, dass** die jeweilige Speicherblase (38) im Ausgangszustand mit dem Medium befüllt ist, und die Sitzvorderkante (26) unter Vergrößerung der Sitztiefe in eine ausgefahrene Stellung bewegt, und dass in Richtung einer entleerten oder vakuumisierten Speicherblase (38) die Sitztiefe bis auf einen Ausgangswert zurückgeht, bei der die Sitzvorderkante (26) in Richtung des sonstigen Sitzteiles (10) zurückverfahren ist.

5. Passagiersitz nach einem der Ansprüche 1 bis 4, **dadurch gekennzeichnet, dass** die Rückstellung der Sitzvorderkante (26) von elastischen Materialien des Sitzpolsters (16) und/oder des Polsterbezugmateriales (42) mit unterstützt ist.

6. Passagiersitz nach einem der Ansprüche 1 bis 5, **dadurch gekennzeichnet, dass** der Energiespeicher sich auf seiner dem Sitzpolsterträger (30) zugewandten Seite an diesem und/oder sonstigen weiteren Stegteilen abstützt und/oder an Halteeinrichtungen, die auch aus Bezugmaterialien und/oder aus verdichtetem Polsterschaummaterial bestehen.

7. Passagiersitz nach einem der Ansprüche 2 bis 6, **dadurch gekennzeichnet, dass** die Speicherblase (38) in einer Tasche (44) oder Taschenaufnahme zwischen den Polstermaterialien im Bereich der Sitzvorderkante (26) einsetzbar ist.

8. Passagiersitz nach einem der Ansprüche 2 bis 7, **dadurch gekennzeichnet, dass** die Speicherblase (38) aus einem länglichen Speicherschlauch gebildet ist, dessen größte Ausdehnung im unbetätigten Zustand längs der Sitzvorderkante (26) verläuft und quer dazu eine demgegenüber verringerte Ausdehnung hat.

9. Passagiersitz nach einem der Ansprüche 2 bis 8, **dadurch gekennzeichnet, dass** die Speicherblase (38) mit ihrer jeweiligen Umfassungswand (40) aus einem Kautschukmaterial gebildet ist, und dass diese an eine Versorgungspumpe anschließbar ist.

10. Passagiersitz nach einem der Ansprüche 1 bis 9, **dadurch gekennzeichnet, dass** die Speicherblase (38) einen großporigen Schaum umfasst oder aus einem dahingehenden großporigen Schaum selbst gebildet ist.
